# EUROPEAN PATENT SPECIFICATION

(11) **EP 1 067 526 B1**
(45) Date of publication and mention of the grant of the patent: **28.10.2009**
(21) Application number: 00305714.8
(22) Date of filing: 06.07.2000
(51) Int. Cl.: G11B 7/09, G11B 19/24, G11B 19/28

(54) **Apparatus for reproducing data from an optical disc inducing vibration and method thereof**
Vorrichtung und Verfahren zur Datenwiedergabe aus einer zum Schwingen geneigten optischen Platte
Appareil et méthode pour lire les donnéees d'un disque optique induisant des vibrations

(30) Priority: 08.07.1999 KR 9927456
(43) Date of publication of application: 10.01.2001
(73) Proprietor: SAMSUNG ELECTRONICS CO., LTD., Suwon-City, Kyungki-do (KR)
(72) Inventor: Koh, Young-ok, Yongin-city, Kyungki-do (KR)
(74) Representative: Clark, David James

(56) References cited:
- EP-A- 0 821 356
- EP-A- 0 833 328
- WO-A-98/27549
- PATENT ABSTRACTS OF JAPAN vol. 1999, no. 05, 31 May 1999 (1999-05-31) & JP 11 039785 A (SANYO ELECTRIC CO LTD), 12 February 1999 (1999-02-12)
- PATENT ABSTRACTS OF JAPAN vol. 1999, no. 02, 26 February 1999 (1999-02-26) & JP 10 302384 A (SONY CORP), 13 November 1998 (1998-11-13)
- PATENT ABSTRACTS OF JAPAN vol. 1998, no. 06, 30 April 1998 (1998-04-30) & JP 10 040640 A (HITACHI LTD;HITACHI VIDEO IND INF SYST INC), 13 February 1998 (1998-02-13)

## Description

The present invention relates to an apparatus for reproducing data from an optical disc, and more particularly, to an apparatus for reproducing data from an optical disc in which a disc inducing vibration is detected and its speed is converted into an appropriate reproducing speed.

Generally, an apparatus for reproducing an optical disc which is revolved by a motor can cause serious vibration according to the state of a medium, or cannot read recorded data due to instability of a servo state.

The existing apparatuses for reproducing data from an optical disc make this disc inducing vibration operate normally by using a vibration sensor or actuator back electromotive force.

For example, an apparatus for reproducing data from an optical disc having a vibration sensor increases the speed of a spindle motor so that the revolution speed of the disc is lowered with respect to the amount of a detected signal.

Also, an optical disc reproducing apparatus using back electromotive force increases the speed of a spindle motor so that the revolution speed of the disc is lowered by back electromotive force induced in an actuator. The operation steps are: 1) The number of revolutions of the spindle motor is increased to a target number of revolutions per minute (RPM); 2) Focus and tracking are switched to "OFF" states; 3) Back electromotive force induced in a tracking coil is amplified and then analogue-to-digital-converted; 4) Focus and tracking are switched to "ON" states.

However, the optical disc reproducing apparatus using the above vibration sensor has demerits in that sensing ability varies with the attaching location of a vibration sensor, and with respect to set's assembled state. In addition, the optical disc reproducing apparatus using actuator back electromotive force requires a comparator for checking actuator back electromotive force, and considerable time is spent checking a vibration-inducing disc after focus and tracking are off, until focus and tracking are reactivated after a vibration-inducing disc is checked. In addition, the method has another shortcoming in that a certain speed factor is fixed when a vibration-inducing disc is checked.

The European patent application EP 0 833 328 describes a device for reading information on an optical disc in which the maximum relative displacement between the reading device and the optical disc allowable is known, and a maximum rotating speed of the disc is detected by this maximum relative displacement being obtained as the disc is rotated at increasing speeds higher than ordinary speed. The optical disc is thereafter rotated at an angular velocity which does not exceed the maximum rotating speed by use of a combination of a constant angular velocity required for inner tracks and a constant linear velocity regime for other tracks.

It is an aim of embodiments of the present invention to provide an apparatus for detecting a disc inducing vibration and changing the revolution speed with respect to the frequency of vibration of the detected disc, and a method thereof.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a conceptual diagram showing generation of a track traverse signal by vibration;
Figure 2 is a block diagram showing an apparatus for reproducing a disc inducing vibration according to an embodiment of the present invention;
Figure 3 is a voltage waveform which measures an actual track traverse signal over a full range of speed factors; and
Figure 4 is a flowchart illustrating an example of a method for reproducing a disc inducing vibration according to the present invention.

Hereinafter, embodiments of the present invention will be described in detail with reference to the attached drawings. The embodiments of the present invention are provided in order to more completely explain the present invention to anyone skilled in the art.

Among characteristics of a disc, a mass eccentric disc causes vibration in reproducing because it has a different center of gravity. An axial eccentric disc causes vibration in reproducing because it has a warped shape and the characteristics of mass eccentricity because of its twisted axis. A net eccentric disc does not cause vibration and only has an eccentric component because recording of the disc is twisted.

In a mass eccentric disc, unbalance in the weight causes a centrifugal force, and the shaft gap of the driving motor, when the disc operates, causes vibration of the motor axis. In addition, chucking of the turntable causes vibration of the axis.

The vibration of a disc axis increases with respect to the speed and eccentric degree of a motor. When it is assumed that the pick-up is fixed, the axis vibration causes a disc to move from side to side with each revolution when seen from the object lens of the pick-up.

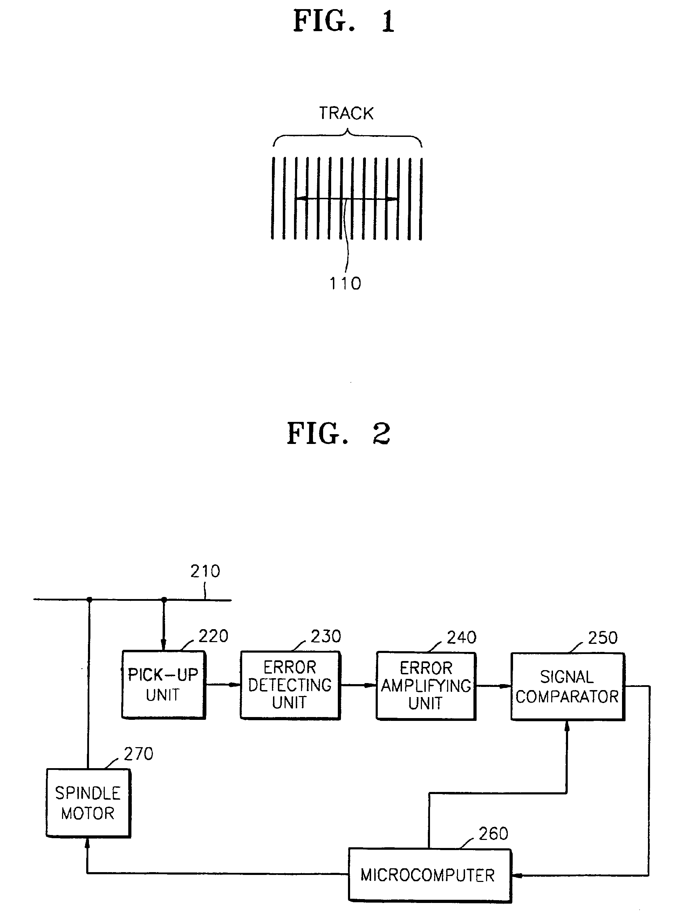

As a result, as shown in Figure 1, with the pick-up unit 220 fixed, a disc is moved by axis variation (axis vibration), and the disc migration causes a track traverse signal in the form of analogue frequency. That is, 110 of Figure 1 can be the migration length caused by the vibration.

Using this track traverse signal, the present invention determines the frequency of vibration.

A net eccentric disc causes a lot of track traverse signals both at a lower speed factor and at a higher speed factor. In addition, at a lower speed factor, an axial eccentric disc and a mass eccentric disc do not cause vibration and therefore, they cause little track traverse signals. At a higher speed factor, however, they cause vibration and therefore cause strong track traverse signals.

Accordingly, by comparing a track traverse signal at a lower speed factor with that at a higher speed factor, it is determined whether or not an axial eccentric disc or a mass eccentric disc causes the vibration.

Figure 2 is a block diagram showing an apparatus for reproducing disc inducing vibration according to the present invention. The apparatus has a pick-up unit 220, an error detecting unit 230, an error amplifying unit 240, a signal comparator 250, a microcomputer 260, and a spindle motor 270.

First, the pick-up unit 220 is provided with photodiodes (E,F). The photodiodes (E,F) detect a tracking traverse signal from the revolving disc 210 when focus is "ON" and tracking loop is "OFF". At this time, the pick-up unit 220 is fixed to a predetermined voltage in the innermost circumference, when tracking is "OFF" for a full range of speed factors, in order to minimize an error from shaking and a measuring error.

The error detecting unit 230 calculates the tracking traverse signal, detected in the pick-up unit 220, in an E-F form. The error amplifying unit 240 differentially-amplifies the E-F form traverse signal calculated in the error detecting unit 230. After comparing the tracking traverse signal amplified in the error amplifying unit 240 and a base signal, the signal comparator 250 generates a pulse signal. By counting pulse signals generated in the signal comparator 250 at the lowest speed factor of a disc and at the highest speed factor of the disc, the microcomputer 260 determines the frequency of vibration. With respect to the frequency of vibration, the revolution number of the spindle motor is varied. That is, in order to determine whether or not a disc is axial eccentric or mass eccentric, the microcomputer 260 subtracts the counted value of the track traverse signal at a lower speed factor from the counted value of the track traverse signal at a higher speed factor. The frequency of the vibration is detected by the difference in the counted values. Then, the revolution speed is varied by comparing the frequency of vibration with a base value. For example, when the frequency of vibration is equal to or over 80Hz, 16 times speed, that is, a lower speed factor is set because the vibration is great. When the frequency of vibration is equal to or over 40Hz, 20 times speed is set. When the frequency of vibration is less than 40Hz, 24 times speed, that is, a higher speed factor is set because the vibration is small. After setting a speed factor, the microcomputer 160 switches tracking "ON" and resumes normal reproduction of data from the disc.

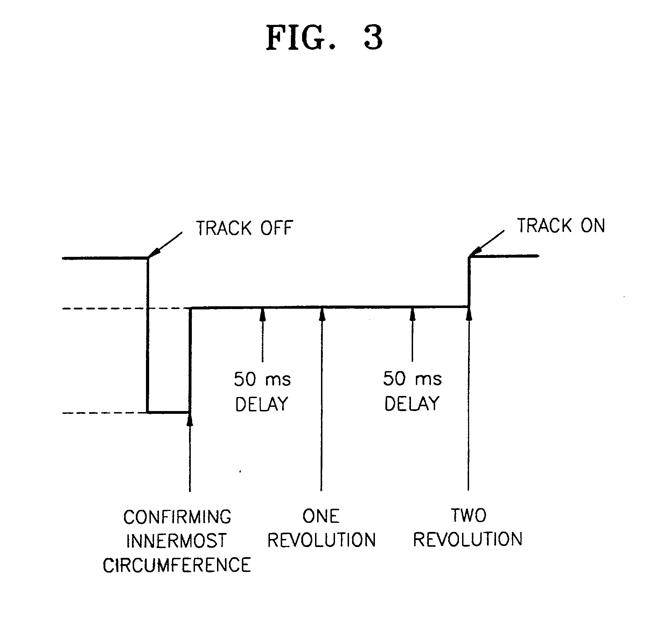

Figure 3 is a voltage waveform which measures an actual track traverse signal over a full range of speed factors in order to reduce disc shaking and measuring errors.

Referring to Figure 3, the microcomputer 260 switches tracking "OFF" by applying track-off voltage to the pick-up driving motor. In this state, the microcomputer 260 checks the innermost circumference of the disc. After a predetermined time passes, that is, after about 2 revolutions of the disc (about 100ms delay), the microcomputer 260 counts the number of pulses of a track traverse signal.

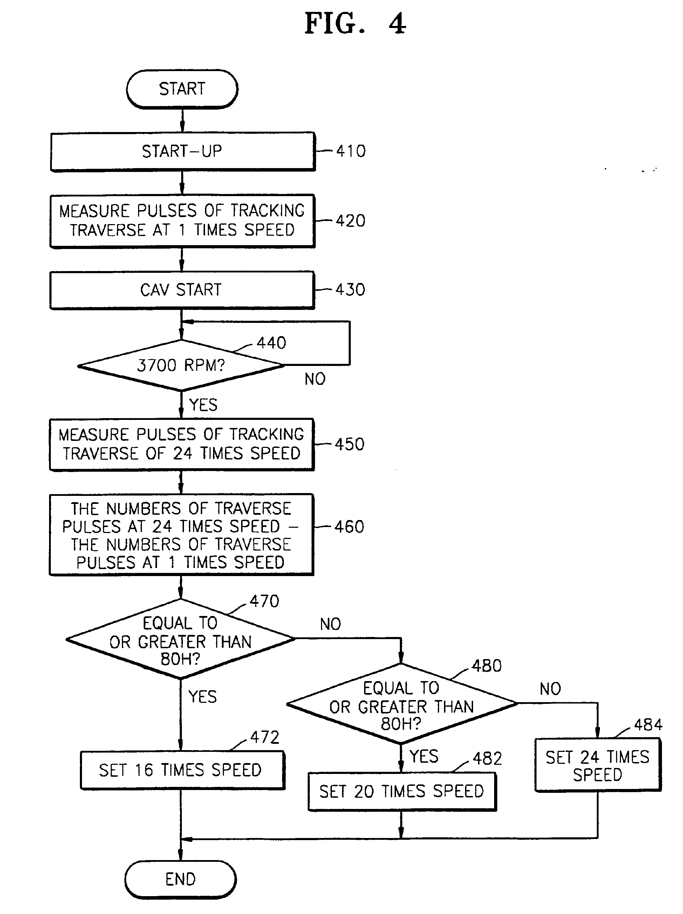

Figure 4 is an example of a method for reproducing data from a disc inducing vibration according to the present invention.

First, the disc is started up by switching focus "ON" and switching tracking "OFF".

In step 420, the innermost circumference of the disc is checked by switching tracking "OFF" at 1 times speed, that is, the lowest speed factor. After a predetermined time passes, the number of track traverse pulses is counted.

In step 430, the constant angular velocity (CAV), which increases from inner circumferences to outer circumferences, is started.

In step 440, the disc is revolved until the speed reaches 3700RPM.

In step 450, when the speed reaches 3700RPM, tracking is switched to "OFF" at the highest speed factor, for example, at 24 times speed. Then, at a predetermined time after checking the innermost circumference of the disc, the number of pulses of the track traverse signal is measured.

In step 460, the frequency of vibration is measured by subtracting the number of traverse pulses at the lowest speed factor (1 times speed) from the number of traverse pulses at the highest speed factor (24 times speed).

In steps 470 and 480, the measured frequency of vibration is compared with the frequency of vibration predetermined as a basis (for example, 80Hz and 40Hz).

In steps 472, 482 and 484, when the measured frequency of vibration is equal to or more than the predetermined frequency of vibration (80Hz), the disc is determined to have a great vibration and 16 times speed, that is, a lower speed factor is set in order to reduce vibration. When the measured frequency of vibration is less than 80Hz and equal to or greater than 40Hz, 20 times speed is set. When the measured frequency of vibration is less than 40Hz, the disc is determined to have a small vibration and 24 times speed, that is, a higher speed factor is set. At this time, the base of speed factor can be set at equal to or less than 45dB noise.

As described above, according to the teachings of the present invention, an appropriate speed factor can be set with respect to the frequency of vibration of a disc. Also, since the frequency of vibration is checked when focus is "ON", tracking becomes faster, which is advantageous.

## Claims

1. A method for reproducing data from a disc in a disc-reproducing system, the method comprising the steps of:
(a) positioning a pick-up at a predetermined position of the disk and counting the number of track traverse pulses which are generated when tracking is switched to "OFF" at the lowest speed factor;
(b) positioning a pick-up at a predetermined position of the disk, increasing the speed of the disc directly to full speed according to the highest speed factor and counting the number of track traverse pulses which are generated when tracking is switched to "OFF" at a point only when the disc has reached full speed according to the highest speed factor;
(c) obtaining th e frequency of vibration by subtracting the count value of track traverse pulses at the lowest speed factor counted in the step (a) from the count value of track traverse pulses at the highest speed factor counted in the step (b); and
(d) varying the speed factor of reproducing data from the disc, by comparing the frequency of vibration obtained in the step (c) with a predetermined base value.

2. The method for reproducing data from the disc of claim 1, wherein in one of the steps (a) and (b), tracking is switched to "OFF", and the number of track traverse pulses is counted with the predetermined position of the disc at which the pick-up is positioned being the innermost circumference of the disc.

3. An apparatus for reproducing data from a disc inducing vibration, the apparatus comprising:
a pick-up unit for detecting a tracking traverse signal by revolving the disc in a tracking "OFF" state;
a signal amplifying unit for differentially-amplifying the tracking traverse signal detected in the pick-up unit;
a signal comparator for generating a tracking traverse pulse signal after comparing the tracking traverse signal amplified in the signal amplifying unit with a base signal; and
a control unit for counting the number of track traverse pulses generated in the signal comparator at the lowest speed factor of the disc, increasing the speed of a disc directly to full speed according to a highest speed factor, and only when the disc has reached full speed according to the highest speed factor counting the number of track traverse pulses generated in the signal comparator at the highest speed factor of the disc, obtaining the difference of the two counted numbers, and then determining the frequency of vibration of a disc with the difference, and varying the speed factor of the disc with respect to the frequency of vibration.

4. The apparatus for reproducing data from a disc inducing vibration of claim 3, wherein the control unit is a means for counting the number of track traverse pulses when tracking is switched to "OFF" and the pick-up unit is positioned at the innermost circumference of the disc.

## Patentansprüche

1. Verfahren zum Wiedergeben von Daten aus einem Datenträger in einem Datenträger-Wiedergabesystem, wobei das Verfahren die folgenden Schritte umfasst:
(a) Positionieren eines Aufnehmers an einer vorbestimmten Position des Datenträgers und Zählen der Anzahl der Spur-Querimpulse, die erzeugt werden, wenn Tracking bei dem niedrigsten Drehzahlfaktor auf "AUS" geschaltet wird;
(b) Positionieren eines Aufnehmers an einer vorbestimmten Position des Datenträgers, Vergrößern der Drehzahl des Datenträgers direkt bis auf volle Drehzahl gemäß dem höchsten Drehzahlfaktor und Zählen der Anzahl der Spur-Querimpulse, die erzeugt werden, wenn Tracking an einem Punkt, erst wenn der Datenträger volle Drehzahl gemäß dem höchsten Drehzahlfaktor erreicht hat, auf "AUS" geschaltet wird;
(c) Erhalten der Vibrationsfrequenz durch Subtrahieren des im Schritt (a) gezählten Zählwerts von Spur-Querimpulsen bei dem niedrigsten Drehzahlfaktor von dem im Schritt (b) gezählten Zählwert von Spur-Querimpulsen bei dem höchsten Drehzahlfaktor; und
(d) Variieren des Drehzahlfaktors der Wiedergabe von Daten aus dem Datenträger durch Vergleichen der im Schritt (c) erhaltenen Vibrationsfrequenz mit einem vorbestimmten Basiswert.

2. Verfahren zum Wiedergeben von Daten aus dem Datenträger nach Anspruch 1, wobei in einem der Schritte (a) und (b) Tracking auf "AUS" geschaltet wird und die Anzahl der Spur-Querimpulse gezählt wird, wobei die vorbestimmte Position des Datenträgers, an der der Aufnehmer positioniert wird, die innerste Kreislinie des Datenträgers ist.

3. Vorrichtung zum Wiedergeben von Daten aus einem Datenträger, der Vibrationen verursacht, wobei die Vorrichtung Folgendes umfasst:
eine Aufnehmereinheit zum Detektieren eines Tracking-Quersignals durch Drehen des Datenträgers in einem Tracking-"AUS"-Zustand;
eine Signalverstärkungseinheit zum Differenzverstärken des in der Aufnehmereinheit detektierten Tracking-Quersignals;
einen Signalkomparator zum Erzeugen eines Tracking-Querimpulssignals nach dem Vergleichen des in der Signalverstärkungseinheit verstärkten Tracking-Quersignals mit einem Basissignal; und
eine Steuereinheit zum Zählen der Anzahl der in dem Signalkomparator erzeugten Spur-Querimpulse bei dem niedrigsten Drehzahlfaktor des Datenträgers, Vergrößern der Drehzahl des Datenträgers direkt bis auf volle Drehzahl gemäß dem höchsten Drehzahlfaktor und erst wenn der Datenträger volle Drehzahl gemäß dem höchsten Drehzahlfaktor erreicht hat, Zählen der Anzahl der in dem Signalkomparator erzeugten Spur-Querimpulse bei dem höchsten Drehzahlfaktor des Datenträgers, Erhalten der Differenz zwischen den beiden gezählten Anzahlen und dann Bestimmen der Vibrationsfrequenz eines Datenträgers mit der Differenz und Variieren des Drehzahlfaktors des Datenträgers mit Bezug auf die Vibrationsfrequenz.

4. Vorrichtung zum Wiedergeben von Daten aus einem Datenträger, der Vibrationen verursacht, nach Anspruch 3, wobei die Steuereinheit ein Mittel ist, das die Anzahl der Spur-Querimpulse zählt, wenn Tracking auf "AUS" geschaltet und die Aufnehmereinheit an der innersten Kreislinie des Datenträgers positioniert ist.

## Revendications

1. Procédé pour lire des données d'un disque dans un système de lecture de disque, le procédé comprenant les étapes consistant à :
(a) positionner une tête de lecture à une position prédéterminée du disque et compter le nombre d'impulsions de franchissement de pistes qui sont générées lorsque la poursuite est "désactivée" pour le facteur de vitesse le plus faible ;
(b) positionner une tête de lecture à une position prédéterminée du disque, en augmentant directement la vitesse du disque jusqu'à la vitesse maximale conformément au facteur de vitesse le plus élevé et en comptant le nombre d'impulsions de franchissement de pistes qui sont générées lorsque la poursuite est "désactivée", seulement en un point où le disque a atteint la vitesse maximale conformément au facteur de vitesse le plus élevé ;
(c) obtenir la fréquence de vibration en soustrayant la valeur de comptage des impulsions de franchissement de pistes pour le facteur de vitesse le plus faible compté lors de l'étape (a) à la valeur de comptage d'impulsions de franchissement de pistes pour le facteur de vitesse le plus élevé compté lors de l'étape (b) ; et
(d) faire varier le facteur de vitesse de lecture de données du disque en comparant la fréquence de vibration obtenue lors de l'étape (c) à une valeur de base prédéterminée.

2. Procédé pour lire des données du disque selon la revendication 1, dans lequel, lors de l'une des étapes (a) et (b), la poursuite est "désactivée", et le nombre d'impulsions de franchissement de pistes est compté, la position prédéterminée du disque à laquelle la tête de lecture est positionnée étant la circonférence la plus intérieure du disque.

3. Appareil pour la lecture de données d'un disque induisant des vibrations, l'appareil comprenant :
une unité de lecture pour détecter un signal de franchissement de pistes en faisant tourner le disque dans un état de poursuite "désactivée" ;
une unité d'amplification de signal destinée à amplifier de façon différentielle le signal de franchissement de pistes détecté dans l'unité de lecture ;
un comparateur de signal destiné à générer un signal d'impulsions de franchissement de pistes après comparaison du signal de franchissement de pistes amplifié dans l'unité d'amplification de signal à un signal de base ; et
une unité de commande destinée à compter le nombre d'impulsions de franchissement de pistes générées dans le comparateur de signal pour le facteur de vitesse le plus faible du disque, à augmenter directement la vitesse d'un disque à la vitesse maximale conformément à un facteur de vitesse le plus élevé, et, seulement lorsque le disque a atteint la vitesse maximale conformément au facteur de vitesse le plus élevé, à compter le nombre d'impulsions de franchissement de pistes générées dans le comparateur de signal pour le facteur de vitesse le plus élevé du disque, à obtenir la différence entre les deux nombres comptés, puis à déterminer la fréquence de vibration d'un disque à partir de la différence, et à faire varier le facteur de vitesse du disque en fonction de la fréquence de vibration.

4. Appareil pour lire des données d'un disque induisant des vibrations selon la revendication 3, dans lequel l'unité de commande est un moyen destiné à compter le nombre d'impulsions de franchissement de pistes lorsque la poursuite est "désactivée" et lorsque l'unité de lecture est positionnée sur la circonférence la plus intérieure du disque.
